# EUROPEAN PATENT APPLICATION

(11) **EP 4 183 897 A1**
(43) Date of publication of application: **24.05.2023**
(21) Application number: 21209367.8
(22) Date of filing: 19.11.2021
(51) Int. Cl.: C25B 1/04, C25B 15/02

(54) **A HYDROGEN PRODUCTION PLANT COMPRISING TWO TYPES OF ELECTROLYSIS SYSTEMS**

(71) Applicant: ABB SCHWEIZ AG, 5400 Baden (CH)
(72) Inventor: BISKOPING, Matthias, 69493 Hirschberg (DE); GUTERMUTH, Georg, 69115 Heidelberg (DE); LENDERS, Felix, 64293 Darmstadt (DE); PRIMAS, Bernhard, 68165 Mannheim (DE); KOENIG, Kai, 69190 Walldorf (DE)
(74) Representative: Maiwald GmbH

(57) **Abstract**

The invention relates to the field of hydrogen production plant, particularly to a method for producing hydrogen in the hydrogen production plant by using two types of electrolysis systems. The first electrolysis system (ES1) comprises an active DC module (Ma) and at least one first-type electrolyzer (E1), which is configured for producing a first hydrogen output (HO1) by using a first power from the active DC module (Ma), and the second electrolysis system (ES2), comprising a passive DC module (Mp) and at least one second-type electrolyzer (E2), which is configured for producing a second hydrogen output (HO2) by using a second power from the passive DC module (Mp). The method comprises the steps of:
in a ramp-up phase, increasing the first hydrogen output (HO1) of the first electrolysis system (ES1); and
when the first hydrogen output (HO1) of the first electrolysis system (ES1) crosses a first predefined hydrogen output threshold (HOₜₕᵣₑₛ₁),
switching on the second electrolysis system (ES2), and
decreasing the first hydrogen output (HO1) of the first electrolysis system (ES1) to the first predefined hydrogen output threshold (HOₜₕᵣₑₛ₁) minus the second hydrogen output (HO2),
so that an overall hydrogen output (HOₜₒₜₐₗ) of the hydrogen production plant (HPP) is a sum of the first hydrogen output (HO1) and the second hydrogen output (HO2).

## Description

### Field of the Invention

The invention relates to the field of hydrogen production plant, particularly to a method for producing hydrogen in the hydrogen production plant by using two different types of electrolysis systems. The invention further relates to a hydrogen production plant, to a program element, and to a computer-readable storage medium.

### Background

A hydrogen production plant is configured for producing hydrogen. In at least some cases, the hydrogen production plant (HPP) comprises a plurality of so-called "stacks", e.g. by Nel Hydrogen. During production, the "stacks" and, accordingly, the rectifier modules, which deliver power for the "stacks", need to be ramped-up and/or ramped-down, for example depending on production requirements and/or the currently available energy for the plant. Thus, it would make sense to use fully controllable rectifier modules ("active" rectifier) for this application, but active rectifier modules may be quite costly. On the other hand, a use of "passive" rectifier modules would be more cost-efficient, but their power output is uncontrolled, which may lead to an undesired behavior of the production plant.

### Description

It is an objective of the invention to provide a method for producing hydrogen in a hydrogen production plant. This objective is achieved by the subject-matter of the independent claims. Further embodiments are evident from the dependent claims and the following description.

One aspect relates to a method for producing hydrogen in a hydrogen production plant. The plant comprises a first electrolysis system, comprising an active DC module and at least one first-type electrolyzer, which is configured for producing a first hydrogen output by using a first power from the active DC module, and a second electrolysis system, comprising a passive DC module and at least one second-type electrolyzer, which is configured for producing a second hydrogen output by using a second power from the passive DC module. The method comprises the steps of:
in a ramp-up phase, increasing the first hydrogen output of the first electrolysis system; and
when the first hydrogen output of the first electrolysis system crosses a first predefined hydrogen output threshold,
switching on the second electrolysis system, and
decreasing the first hydrogen output of the first electrolysis system to the first predefined hydrogen output threshold minus the second hydrogen output,
so that an overall hydrogen output of the hydrogen production plant is a sum of the first hydrogen output and the second hydrogen output.

As explained in detail below, the first electrolysis system and the second electrolysis system differ in several aspects and/or features. The first electrolysis system and the second electrolysis system may use the same type of electrolyzer; however, at least in some embodiments, the first-type electrolyzer may be of a different type than the second-type electrolyzer. Each one of the electrolysis systems may comprise one or more electrolyzers. The first-type electrolyzer may get its power from a so-called active DC module, the second-type electrolyzer may get its power from a so-called passive DC module. The passive DC module may use diodes, e.g. high-performance diodes, whereas the active DC module may use controllable rectifiers. Although one embodiment of the hydrogen production plant may have only one first electrolysis system and several second electrolysis systems, alternative embodiments may have a different number of first and second electrolysis systems, for instance only one first electrolysis system and only one second electrolysis system, or several first electrolysis systems and several second electrolysis systems.

The so-called passive DC module may comprise rectifiers that use diodes, e.g. high-performance diodes, for rectifying an AC input. The active DC module may use SCRs (Silicon Controlled Rectifiers, or thyristors), IGBTs (Insulated-Gate Bipolar Transistors) and/or other types of controllable rectifiers for rectifying the AC input. Hence, costs for an active DC module may be higher, e.g. caused by more expensive components (e.g. for the rectifiers) and by an additional effort for controlling the SCRs. Hence, the method described above and/or below, where two types of electrolysis systems are used, makes the overall hydrogen output of the hydrogen production plant well controllable, but may reduce the cost for its components significantly.

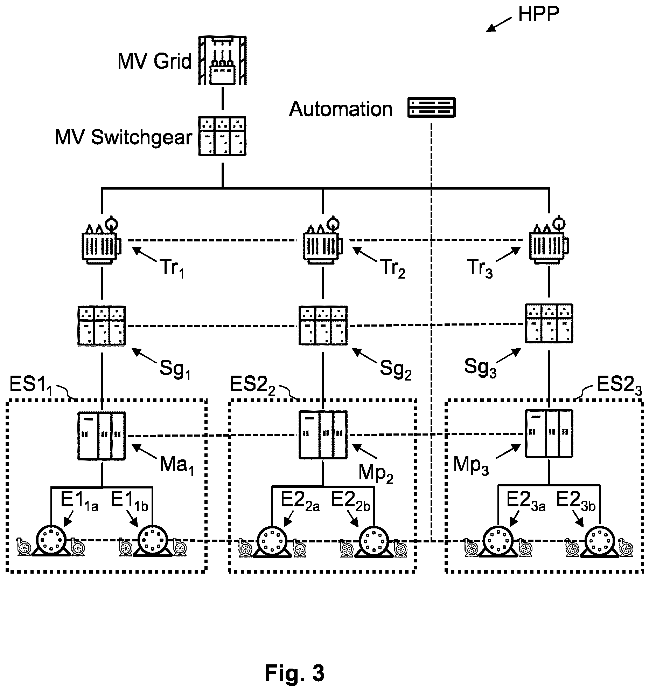

The power delivery system of the plant comprises several DC modules each connected to one or more electrolyzers stacks (eg. E1₁ₐ and E1_{1b} in Fig. 3) . At least one active DC module (Ma) and at least one passive DC module (Mp) is used to form the power delivery system. The overall hydrogen production and/or the overall electric power consumption of the plant is either the sum of the individual hydrogen outputs of the electrolyzers connected to the DC modules and/or the sum of all power consumed by all DC modules. The active DC modules can be controlled and hence also switched on/off via its controllable rectifier, although a switchgear for protection is used in front of the active DC module (Sgi in **Fig. 3**). Switching on/off of the passive DC module is only possible by turning on/off the switchgear (Sg₂ and Sg₃ in **Fig. 3**). Although, there might be cases where an additional tap-changer is used to modify the grid input voltage of the passive rectifier and hence allow limited control of the electrical input power of the passive DC module.

The electrolysis systems may get its power - depending on its specified power output - from, e.g., a so-called "medium voltage grid" (MV grid), typically with voltages from about 1 kV to about 50 kV. Alternatively, a "high voltage grid" (HV grid) may be used, e.g. for very large hydrogen production plant. Note that the method described above and/or below also works for voltages below 1 kV. Thus, at least some of the methods described above and/or below may be applied to a broad range of AC sources, e.g. having one phase, three phase or any other AC source.

When running the hydrogen production plant, there may be a need to ramp-up the hydrogen production, e.g. caused by a higher demand for the overall hydrogen output and/or caused by more currently available energy for the plant. This may particularly the case for a so-called "green hydrogen production plant", which may get its energy, e.g., from solar panels and/or wind-driven generators. Hence, the "stacks" and, accordingly, the rectifier modules, which deliver power for the "stacks", need to be ramped-up. There may be also a need for ramping-down the hydrogen production, and/or for running the hydrogen production plant in a ramp-up and ramp-down mode. Thus, during production, the hydrogen production plant may be in a constant phase, in a ramp-up phase, or in a ramp-down phase. In the constant phase, no control interventions may be necessary. Also during the constant phase, the control system may still react on grid voltage fluctuations, which may influence the power supplied, e.g., by the passive DC modules, and/or on hydrogen output changes, e.g. caused by temperature or other variations in the stacks.

In the ramp-up phase, the overall hydrogen output needs to be increased. For this, the first hydrogen output of the first electrolysis system is increased, up to a first predefined hydrogen output threshold. When the first hydrogen output crosses the first predefined hydrogen output threshold, the second electrolysis system can be switched on. For keeping, in this transition phase, the overall hydrogen output at the same level, the first hydrogen output of the first electrolysis system is decreased to the first predefined hydrogen output threshold minus the second hydrogen output. This may include zero hydrogen output of the first electrolysis system (at least at this level), depending on the definition of the "first predefined hydrogen output threshold" and of the "second hydrogen output". In at least some cases, the second electrolysis system may be operated on two levels only, i.e. at zero power or at a maximum power, for example because the diodes are not controllable. In at least some cases, the second electrolysis system may comprise a device - e.g. a tap changer - that is configured for changing the second power of the passive DC module, which is the electrical power input for the second-type electrolyzer, thus changing the second hydrogen output. It may be noted that the (first as well as the second) predefined hydrogen output threshold may not necessarily be a fixed threshold, but may be varied, depending on several influencing factors, such as power level of the plant's input power, degradation of the modules, and/or further factors.

For real-world electrolysis systems, the switching on of the second electrolysis system and/or the decreasing the first hydrogen output of the first electrolysis system may take a while, e.g. more than 1 min, more than 5 min, more than 10 min, caused, e.g., by internal time constants (or "inertia") of the electrolysis systems. It may make sense to consider these time constants in the control module of the hydrogen production plant.

It may be advantageous that the method described above and/or below may combine benefits of active and passive DC modules. Generally, a benefit of having a passive rectifier configuration, i.e. a diode-based configuration of the rectifier as described, is that a diode rectifier creates substantially less harmonics on both the DC-side and on the AC-side and, hence, requires less harmonics-filters and/or control effort to achieve a certain voltage and/or current quality. Furthermore, a passive rectifier needs no control units, because it simply rectifies the input voltage and therefore needs no drivers for the semiconductors; this may result in higher mean time between failures (MTBF) as well as in fewer failures of the components. Additionally, further cost savings may be achieved, because some components - i.e. a control system, harmonic filters, semiconductor drivers, etc. - are less costly, or simply not required for passive DC modules. Moreover, in most cases passive components are cheaper. The active DC modules, on the other hand, are fully controllable, but may require further components and may be quite costly. Hence, the method described above and/or below may combine at least some of their benefits, leading to well-controllable and cost-efficient hydrogen production plants.

In various embodiments, the method further comprises the steps of:
In a ramp-down phase, decreasing the first hydrogen output of the first electrolysis system; and
when the first hydrogen output of the first-type electrolyzer crosses a second predefined hydrogen output threshold, switching off the second electrolysis system,
and increasing the first hydrogen output of the first electrolysis system to the second predefined hydrogen output threshold plus the second hydrogen output.

The ramp-down phase may be controlled in a quite analogous way than the ramp-up phase, thus leading to a consistent overall control of the hydrogen production, with positive effects on controllability and/or maintenance. Moreover, the analogous way of controlling the ramp-down phase may open up further possibilities, e.g. a control mechanism that comprises a hysteresis.

In various embodiments, the first and/or the second predefined hydrogen output threshold is greater than or equal to the second hydrogen output. This may contribute to a better controllability of the overall system.

In various embodiments, the first predefined hydrogen output threshold is higher, e.g. 10 % higher, 20 % higher, 30 % higher, 50 % higher, 70 % higher, 100 % higher, 150 % higher, 200 % higher, than the second hydrogen output, and/or the second predefined hydrogen output threshold is higher than zero and/or lower than the second hydrogen output.

In various embodiments, the first predefined hydrogen output threshold minus the second electrolyzer output is greater than or equal to the second predefined hydrogen output threshold. This feature enables a control that comprises a hysteresis. This may advantageously lead to reducing or even preventing an effect of fast switching on and off ("oscillations") the second electrolysis system around certain points, e.g. around the first and/or the second predefined hydrogen output threshold. Since switching on and off the second electrolysis system may, in at least some cases, lead to stress on some components of the electrolysis systems, reducing the number of on-and-off-switching may lead to higher reliability of the systems and/or longer maintenance intervals.

In various embodiments, the hydrogen production plant comprises a plurality, N2, of second electrolysis systems, so that the overall hydrogen output of the hydrogen production plant is a sum of the first hydrogen output plus a sum of the N2 second maximum hydrogen outputs. Such systems may be even very cost-effective, because far less (e.g. only one) first electrolysis system is needed, whereas a plurality of - less expensive - second electrolysis system may be used.

The second electrolysis systems may have different performances, operation range, efficiency, cost, lifetime and/or different manufacturers. However, in at least some embodiments, each one of the N2 second electrolysis systems, and/or of the second-type electrolyzers, may have essentially the same maximum second hydrogen output.

In some embodiments, the hydrogen production plant comprises a plurality, N1, of first electrolysis systems. This may, e.g., contribute to a higher power of the first electrolysis system. Additionally or as an alternative, this may be used to implement a redundancy concept of the first electrolysis systems, for example a warm redundancy concept.

In various embodiments, the first-type electrolyzer is designed as a polymer electrolyte membrane, PEM, electrolysis system, and/or the second-type electrolyzer is designed as an alkaline water electrolysis system. This selection may support the characteristics of the first or the second electrolysis system, respectively.

In some embodiments, the passive DC module can be operated at zero power or at a maximum power. This may be a highly cost-effective DC module, because it only uses diodes for rectifying and does not need further components for controlling the input power of the passive DC module.

In some embodiments, the passive DC module can be operated at zero power, at the maximum power, or at a low power, and/or the passive DC module can be operated at three or more power levels, particularly by means of a tap changer.
This provides a higher degree of flexibility for the passive DC modules, wherein the diodes for rectifying still can be used. In all these embodiments - may it have two, three or even more power levels -, the second hydrogen output can be produced by using the second power from the passive DC module at any one of the above power levels except zero.

In various embodiments, the first hydrogen output is a function of the first power from the active DC module, and of a temperature and a pressure of the at least one first-type electrolyzer, and/or the second hydrogen output is a function of the second power from the passive DC module, and of a temperature and a pressure of the at least one second-type electrolyzer. Considering these dependencies may lead to an improved controlling of the plant, particularly of the electrolyzers. Additionally or as an alternative, the controlling may consider influencing factors like heat cycling and/or cooling setpoints, which may lead to less degradation of the electrolyzers and/or the electrolysis systems

In various embodiments, the first hydrogen output is a function of a degradation of the first electrolysis system, and/or the second hydrogen output is a function of a degradation of the second electrolysis system. Considering these dependencies may lead to an improved controlling of the plant, particularly of the electrolyzers.

An aspect relates to a hydrogen production plant, comprising:
a first electrolysis system, comprising an active DC module and at least one first-type electrolyzer, which is configured for producing a first hydrogen output by using a first power from the active DC module,
a second electrolysis system, comprising a passive DC module and at least one second-type electrolyzer, which is configured for producing a second hydrogen output by using a second power from the passive DC module, wherein a maximum of the second hydrogen output is less than or equal to a maximum of the first hydrogen output, and
a control module, configured for controlling the passive DC module and the active DC module according to a method as described above and/or below.

In various embodiments, the controlling the passive DC module and the active DC module is dependent on a requested overall hydrogen output of the hydrogen production plant, and/or the controlling the passive DC module and the active DC module is dependent on an available power from a power source, which delivers a sum of the first power for the active DC module and the second power for the passive DC module. Shortly spoken, the controlling may be driven by an output demand, and/or by input factors. The input factors may, for instance, take into account that the input may fluctuate on a long-term or mid-term range, e.g. caused by the energy source (solar or wind power), and/or on a short-term range main, for example power fluctuations.

In various embodiments, the passive DC module comprises uncontrolled rectifiers, and/or the active DC module comprises controlled rectifiers. The uncontrolled rectifiers may use rectifying diodes, e.g. high-performance diodes, for rectifying an AC input. The active DC module may use SCRs (Silicon Controlled Rectifiers, or thyristors), IGBTs (Insulated-Gate Bipolar Transistors) and/or other types of controllable rectifiers for rectifying the AC input.

An aspect relates to a computer program product comprising instructions, which, when the program is executed by a control module of a hydrogen production plant and/or on another processing unit, cause the control module and/or the processing unit to carry out the method as described above and/or below.

An aspect relates to a computer-readable storage medium where a computer program or a computer program product as described above is stored on.

For further explanations, the invention is described by means of embodiments shown in the figures. These embodiments are to be considered as examples only, but not as limiting.

### Brief Description of the Drawings

The drawings depict:
- **Fig. 1**: schematically an example of a hydrogen production plant according to an embodiment;
- **Fig. 2**: schematically another example of a hydrogen production plant according to an embodiment;
- **Fig. 3**: schematically another example of a hydrogen production plant according to an embodiment;
- **Fig. 4**: schematically a combination of one first and one second electrolysis system according to an embodiment;
- **Fig. 5**: schematically a behaviour of an electrolyzer according to an embodiment;
- **Fig. 6**: schematically a part of a passive DC module according to an embodiment;
- **Fig. 7**: schematically a part of an active DC module according to an embodiment;
- **Fig. 8**: schematically a combination of first and second electrolysis systemss, which control their hydrogen output, in a hydrogen production plant according to an embodiment;
- **Fig. 9**: schematically an overall hydrogen output of modules according to an embodiment;
- **Fig. 10**: schematically a temperature dependency of an example electrolyzer cell according to an embodiment;
- **Fig. 11**: a flow diagram according to an embodiment.

### Detailed Description of Embodiments

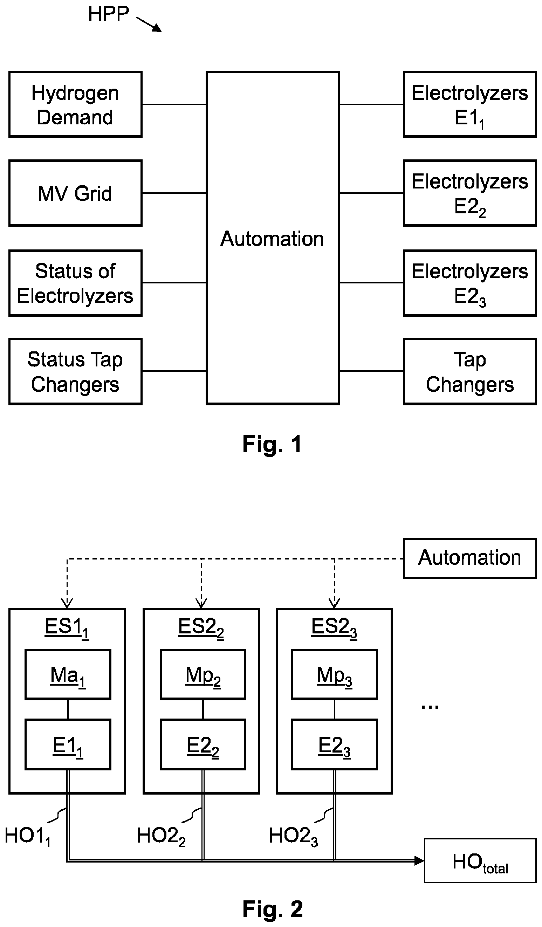

**Fig. 1** shows schematically an example of a hydrogen production plant HPP according to an embodiment. The HPP is controlled by a control module or automation system "Automation". The control module's outputs include one first-type electrolyzer E1₁, which is configured for producing a first hydrogen output HO1₁ (see, e.g., **Fig. 2**) and two second-type electrolyzers E2₂ and E2₃, which are each configured for producing a second hydrogen output HO2₂ and HO2₃, respectively. The control module's outputs further include setpoint for tap changers, e.g. for changing an input power of the second-type electrolyzers E2₂ and E2₃. The inputs of the control module comprise a hydrogen demand, a "medium voltage grid" (MV Grid), a status of the electrolyzers, and a status of the tap changers.

**Fig. 2** shows schematically another example of a hydrogen production plant HPP according to an embodiment. The control module or automation system "Automation" controls one first electrolysis system ES1₁ and two second electrolysis systems ES2₂ and ES2₃. The first electrolysis system ES1₁ comprises an active DC module Ma₁ and one first-type electrolyzer E1₁, which is configured for producing a first hydrogen output HO1₁, by using a first power from the active DC module Ma₁. The second electrolysis systems ES2₂ and ES2₃ comprise each a passive DC module Mp₂ and Mp₃, and one second-type electrolyzer E2₂ and E2₃, respectively, which are configured for producing a second hydrogen output HO2 - here: HO2₂ and HO2₃ - by using a second power from the passive DC module Mp₂ and Mp₃, respectively.

**Fig. 3** shows schematically another example of a hydrogen production plant HPP according to an embodiment. An MV Grid delivers the power for running the HPP, via an MV Switchgear. The MV Grid is connected to transformers Tr₁ to Tr₃ (with or without a tapchanger) and switchgears Sg₁ to Sg₃. Each one of the switchgears Sg₁ to Sg₃ is connected to electrolysis systems ES2₁ to ES2₃. The first electrolysis system ES1₁ comprises an active DC module Ma₁ and two first-type electrolyzers E1₁ₐ and E1_{1b}, which are configured for producing (as a sum of their hydrogen outputs) a first hydrogen output HO1₁, by using a first power from the active DC module Ma₁. The second electrolysis system ES2₂ comprises a passive DC module Mp₂, and two second-type electrolyzers E2₂ₐ and E2_{2b}, which are configured for producing (as a sum of their hydrogen outputs) a second hydrogen output HO2₂ by using a second power from the passive DC module Mp₂. The further second electrolysis system ES2₃ has a similar structure as the second electrolysis system ES2₂. The plant and its components are controlled by an overall plant automation or control system "Automation".

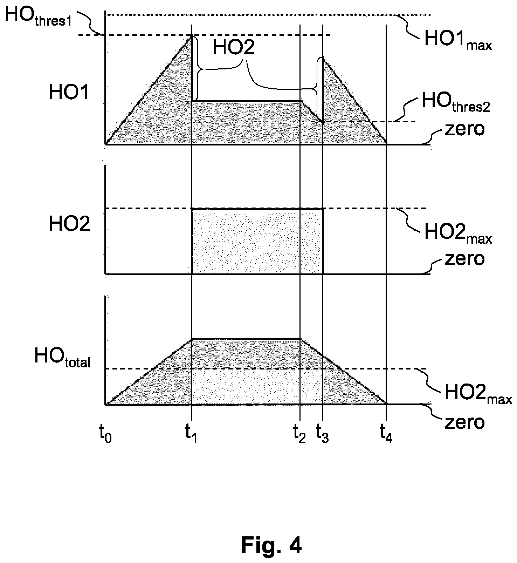

**Fig. 4** shows schematically a combination of one first electrolysis system ES1 and one second electrolysis system ES2 according to an embodiment. The first electrolysis system ES1 (may correspond, e.g., to ES1₁ of **Fig. 2** or **Fig. 3****)** produces a first hydrogen output HO1, and the second electrolysis system ES2 (may correspond, e.g., to ES2₂ or ES2₃ of **Fig. 2** or **Fig. 3****)** produces a first hydrogen output HO2. This results in an overall hydrogen output HOₜₒₜₐₗ of the hydrogen production plant HPP, which is a sum of the first hydrogen output HO1 and the second hydrogen output HO2.

A ramp-up phase of HOₜₒₜₐₗ lasts from to to t₁. At t₁, when reaching or crossing a first predefined hydrogen output threshold HOₜₕᵣₑₛ₁, the second electrolysis system ES2 is switched on. Also at t₁, the first hydrogen output HO1 of the first electrolysis system ES1 is decreased to the first predefined hydrogen output threshold HOₜₕᵣₑₛ₁ minus the second hydrogen output HO2. As a result, the overall hydrogen output at t₁ is kept at (essentially) the same level. In **Fig. 4****,** the switching on and the decreasing is depicted as a short moment, for the sake of simplicity. However, for real-world electrolysis systems, the switching on of the second electrolysis system and/or the decreasing the first hydrogen output of the first electrolysis system may take a while, e.g. a few minutes, caused, e.g., by internal time constants (or "inertia") of the electrolysis systems. Since the second electrolysis system ES2 of **Fig. 4** is run only with two power levels, namely with zero power and HO2ₘₐₓ, HO2 of **Fig. 4** is equal to HO2ₘₐₓ.

From t₁ to t₂, the overall hydrogen output HOₜₒₜₐₗ is kept unchanged. A ramp-down phase of HOₜₒₜₐₗ lasts from t₂ to t₄. At t₃, when the first hydrogen output HO1 of the first-type electrolyzer E1 crosses a second predefined hydrogen output threshold HOₜₕᵣₑₛ₂, the second electrolysis system ES2 is switched off. Also on t₃, the first hydrogen output HO1 of the first electrolysis system ES1 is increased to the second predefined hydrogen output threshold HOₜₕᵣₑₛ₂ plus the second hydrogen output HO2. Since HOₜₕᵣₑₛ₂ is here greater than zero, the first hydrogen output HO1 is not reduced to zero at t₃.

Note that a control of the hydrogen output delivery system bears a risk to produce oscillations of switching on and off the passive DC modules, particularly when the ramping up and down is done around one of the thresholds HOₜₕᵣₑₛ₁ and HOₜₕᵣₑₛ₂. This risk may be reduced by a hysteresis strategy. In **Fig. 4****,** HOₜₕᵣₑₛ₁ is higher than HOₜₕᵣₑₛ₂. Hence, when the overall hydrogen output HOₜₒₜₐₗ oscillates around one of the thresholds HOₜₕᵣₑₛ₁ and HOₜₕᵣₑₛ₂, the switching on and off is not performed immediately, but with some hysteresis.

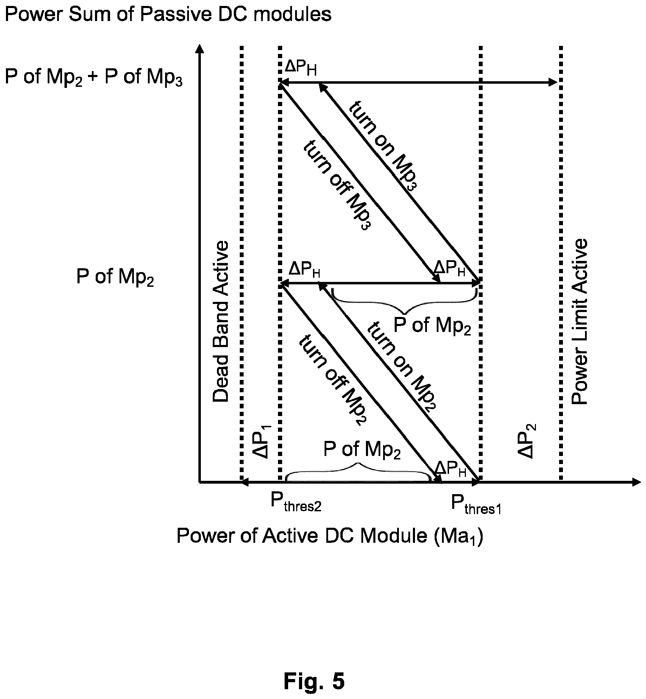

**Fig. 5** shows schematically a behaviour of a hydrogen production plant, i.e. a hysteresis switch-over, according to an embodiment. The power of the active DC module represented by the x-axis in **Fig. 5** has 4 zones. A "dead-band" zone in which the active DC module should not operate in, according to a connected first-type electrolyzer, a ΔP₁ zone, which acts as a potential buffer before the active DC module enters the "hysteresis zone" and finally a last buffer zone ΔP₂ acting when all passive DC modules are activated and it lasts till the power limit of the active DC module Ma₁ is reached (Power Limit Active). Inside the "hysteresis zone", a switch point Pₜₕᵣₑₛ₁ defines to turn on one of the passive DC modules, here Mp₂ (cf. **Fig. 3**)**,** resulting in the total power sum of the passive DC modules P of Mp₂. During turning on or switching on the passive DC module Mp₂, the power of the active DC module Ma₁ is reduced as indicated by the arrow "turn on Mp₂" from Pₜₕᵣₑₛ₁ in a way that the sum of the power coming from the passive DC module Mp₂ and the active DC module Ma₁ follows the predefined overall setpoint. This transition may, e.g., happen within 10 - 1000 ms. If the overall power was further increased, the active DC module would again cross Pₜₕᵣₑₛ₁ and - similarly to the turning on of Mp₂ - Mp₃ (cf. **Fig. 3**) would be turned on.

In the other direction, after Mp₂ was turned on, the power of the active DC module has to fall until Pₜₕᵣₑₛ₂, before Mp₂ is turned off and the active DC module power rises along the arrow "turn off Mp2". To prevent rapid oscillations between turning on and off passive DC modules, a ΔP_{H} difference is designed. This implies that the width, Pₜₕᵣₑₛ₁ minus Pₜₕᵣₑₛ₂ is wider than power of Mp₂, and results in ΔP_{H}, equals Pₜₕᵣₑₛ₁ minus Pₜₕᵣₑₛ₂ minus power of Mp₂. The overall ramp up and down related to time is shown in **Fig. 4****.** not for the input power but for hydrogen output which follows the same principal. It can be clearly seen that the first electrolysis system ES1₁ (powered by Ma1) in the top-most diagram of **Fig. 4** has two different decision points to turn on and turn off the second electrolysis system ES2₂ (powered by Mp₂).

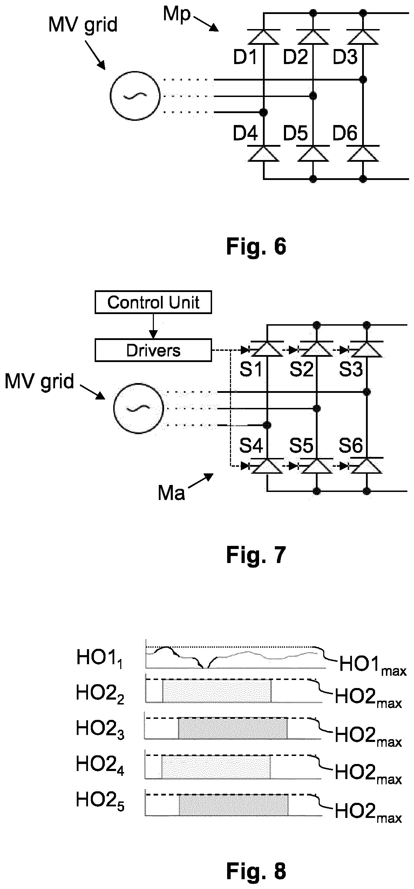

**Fig. 6** shows schematically a part of a passive DC module Mp according to an embodiment. The module Mp is, as an example, connected to a 3-phase MV grid ("medium voltage grid"). The module Mp comprises a passive rectifier, i.e. a diode arrangement consisting of diodes D1 - D6. Between the grid connection and the rectification stage - indicated by dots - additional components may be arranged, e.g. a filter arrangement for passive rectification a transformer, and/or a tap changer. At the output on the right there might also be filter elements depending on the need of the attached load, e.g. the electrolyzer stack.

**Fig. 7** shows schematically a part of an active DC module Ma according to an embodiment. The module Mp is, as an example, connected to a 3-phase MV grid ("medium voltage grid"). The module Ma comprises an active rectifier, i.e. an arrangement of SCRs S1 - S6 (SCR: silicon controlled rectifier or thyristor) and/or IGBTs (Insulated-Gate Bipolar Transistors). Each one of the SCRs S1 - S6 is driven by a driver, the drivers connected to a control unit. Between the grid connection and the rectification stage filter arrangement for passive rectification may be arranged (not shown). At the output on the right there may be filter elements, e.g. depending on the requirements of the attached load, e.g. of an electrolyzer stack.

**Fig. 8** shows schematically a combination of passive and active DC modules, which control their hydrogen output, in a hydrogen production plant according to an embodiment. The hydrogen production plant comprises four second electrolysis systems ES2₂ to ES2₅ and one first electrolysis system ES1₁. The first electrolysis system ES1₁ (cf., e.g., **Fig. 3****)** may vary its hydrogen output HO1₁ between zero and a maximum output HO1ₘₐₓ, which is shown as dotted line, and is marked as "HO1ₘₐₓ". It is clearly visible that the hydrogen outputs HO2₂ to HO2₅ of the second electrolysis system ES2₂ to ES2s have either a value of zero, or a value of HO2ₘₐₓ. The HO2ₘₐₓ are shown as dashed lines, and are marked as "HO2ₘₐₓ". The individual "HO2ₘₐₓ" values may be different for each one of the modules. Additionally or as an alternative, the second electrolysis system may be implemented as an electrolysis system with three or more hydrogen output levels.

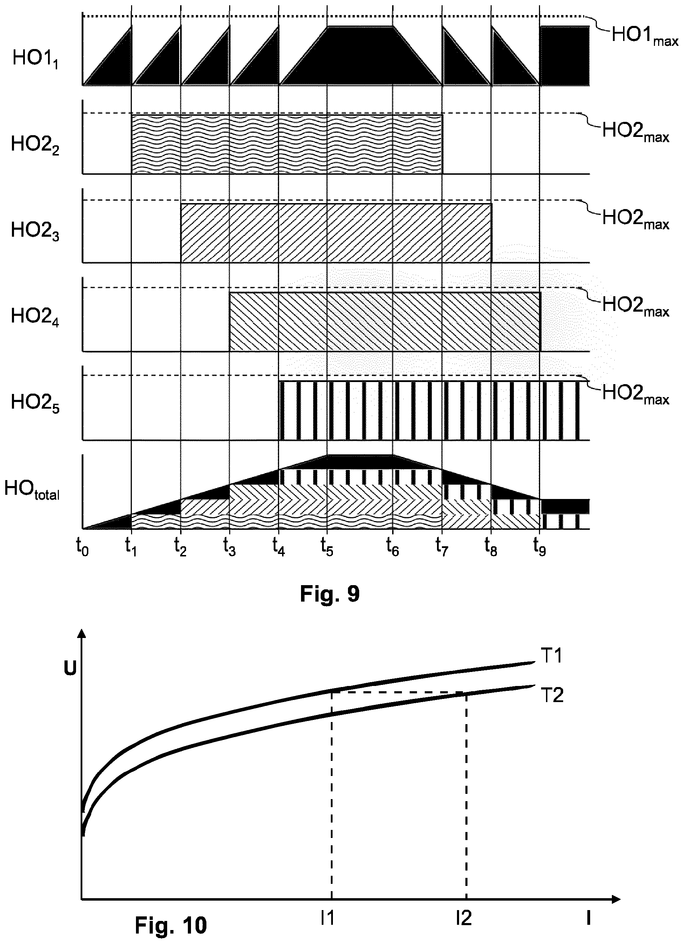

**Fig. 9** shows schematically an overall hydrogen output of five modules according to an embodiment. The hydrogen production plant of **Fig. 9** (not shown, but with similar structure as the HPPs of **Fig. 1** to **3****)** contains one first electrolysis system (ES1₁) configured for producing a first hydrogen output HO1₁, and four second electrolysis systems (ES2₂ to ES2₅) configured for producing a second hydrogen output HO2₂ to HO2₅. Thus, the overall hydrogen output HOₜₒₜₐₗ of this hydrogen production plant HPP is a sum of the first hydrogen output HO1₁ and the second hydrogen outputs HO2₂ to HO2₅.

The envelope curve HOₜₒₜₐₗ shows a ramp-up phase between to and t₅, a constant phase between t₅ and t₆, and a ramp-down phase between t₆ and tg. The maximum hydrogen output HO1ₘₐₓ of the first electrolysis system (ES1₁) is shown as dotted line. Each one of the hydrogen outputs HO2₂ to HO2₅ is either zero or HO2ₘₐₓ; in the example shown, each one of the second hydrogen outputs HO2₂ to HO2₅ is the same. In some other embodiments, the value of the single baseload powers may be different for each one of the second hydrogen outputs and/or the second-type electrolyzers.

During the ramp-up phase of the hydrogen production plant, the first hydrogen output HO1₁ always changes its actual operating point from zero slowly to its maximum hydrogen output HO1ₘₐₓ. The first electrolysis system (ES1₁) must be able to deliver at least the hydrogen output HO2ₘₐₓ of one of the second electrolysis systems (ES2₂ to ES2₅), i.e. HO1ₘₐₓ needs to be greater than or equal to HO2ₘₐₓ. As soon as the envelope curve HOₜₒₜₐₗ reaches, at t₁, the HO2ₘₐₓ output value, i.e. the first predefined hydrogen output threshold HOₜₕᵣₑₛ₁, the second electrolysis system (ES2₂), is switched on, thus producing at t₁ a hydrogen output HO2₂ = HO2ₘₐₓ. Also at t₁, the first hydrogen output HO1₁ of the first electrolysis system (ES1₁) is decreased to the predefined hydrogen output threshold minus the second hydrogen output, i.e. to an output value of HOₜₕᵣₑₛ₁ - HO2₂. Since, in the case shown, HOₜₕᵣₑₛ₁ = HO2₂, the hydrogen output HO2₂ is reduced to zero at t₁. Note that, for real-world electrolysis systems, the switching on of the second electrolysis system and/or the decreasing the first hydrogen output of the first electrolysis system may take a while, e.g. a few minutes, caused, e.g., by internal time constants of the electrolysis systems. On the electronics' side, there may be a much faster reaction speed, e.g. due to the fast control speed of active rectifiers based on power electronics.

This procedure is repeated at t₂, t₃ and t₄, thus leading to a linear hydrogen output increase of the overall hydrogen output HOₜₒₜₐₗ. The ramp-up of HOₜₒₜₐₗ is continued until t₅, between t₄ and t₅ only caused by an output increase of HO1₁. During the constant phase of HOₜₒₜₐₗ, i.e. between t₅ and t₆, no changes need to be done by the control units of the active and passive DC modules.. Possibly except compensating fluctuations coming from the grid and influencing the passive power supply (not shown here).

During the ramp-down phase of the hydrogen production plant, starting with t₆, the first electrolysis system (ES1₁) decreases (in this embodiment) its hydrogen output HO1₁ to HOₜₕᵣₑₛ₂, which is zero in this embodiment, until t₇. At t₇, a second predefined hydrogen output threshold HOₜₕᵣₑₛ₂ is reached. At t₇, the second electrolysis system (ES2₂), is switched off. Also at t₇, the first hydrogen output HO1₁ of the first electrolysis system (ES1₁) is increased to the second predefined hydrogen output threshold plus the second hydrogen output, i.e. to an output value of HOₜₕᵣₑₛ₂ + HO2₂. Then, the ramp-down of the overall hydrogen output HOₜₒₜₐₗ continues until tg. At t₈ and tg, HO2₃ and HO2₄ are turned off, thus reducing their hydrogen output to zero. From tg, the overall power Pₜₒₜₐₗ is kept constant, and the overall hydrogen output HOₜₒₜₐₗ is delivered by the modules ES1₁ and ES2₂.

Fig. 10 shows schematically a temperature dependency of an example electrolyzer cell according to an embodiment. The x-axis depicts a current I of the electrolyzer cell; the y-axis depicts a voltage U of the cell. Their dependency is shown for two temperatures T1 and T2. In a so-called "stack", a plurality of these cells need to be considered; the cells may be connected in series. The active rectifier or active DC module, or the overall control or automation scheme, needs to know at which power level the passive DC module starts when switched on, in order to adjust its own set-point, so that a smooth transition can be established when ramping up. The set-point may depend on several parameters, e.g. on temperature, pressure, massflow, and/or others. In **Fig. 10****,** as an example, an influence of the temperature on the cell is shown, and how a second electrolysis system may behave over time under a fixed outer voltage of, e.g., 1.7 V per cell. The second electrolysis system may be switched on with a current of I1 a temperature T1, and the outer voltage being constant, the temperature of the electrolyze stack may rise over time, e.g. due to losses, and may reach a higher temperature T2, i.e. the final and/or nominal operating point. The temperature of the stack may be controlled by an external control system and may, additionally or as an alternative, be controlled by the overall plant automation or control system. Caused by the higher temperature T2, the current flowing into the stack may increase to a current I2 and, thus, the power. It may be advantageous to compensate this behavior; this may be achieved by controlling the active DC module in a way that the overall power Pₜₒₜₐₗ, as the sum of the power of active and passive DC modules, is kept constant, , and/or by controlling an overlaying control system, which may take into account further factors, for instance heat cycling, turn on/off, change cooling set-point, etc. of the individual stacks. This may advantageously contribute to avoid degradation. Furthermore, the defined control of the stack temperature could be used to control the production of hydrogen in the second electrolysis systems (e.g. using passive rectifier), and therefore also the grid power consumption.

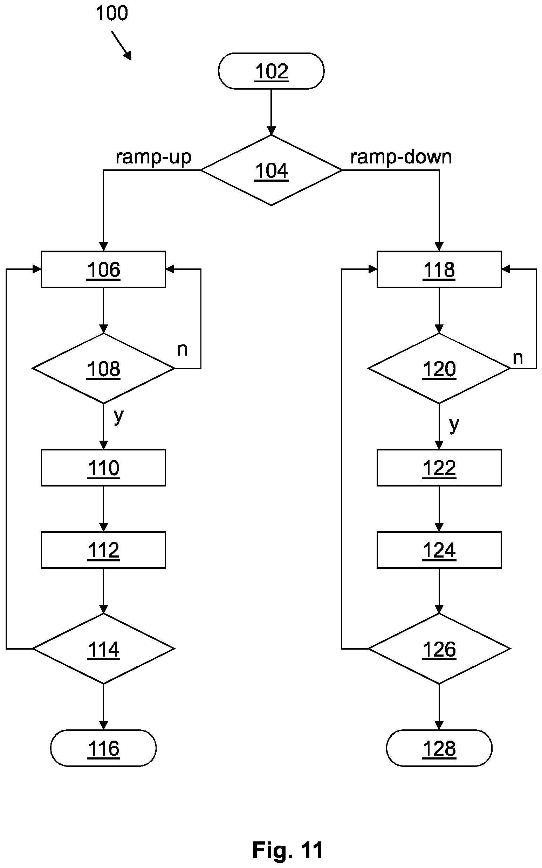

**Fig. 11** shows a flow diagram 100 according to an embodiment. The flow diagram 100 describes a method for producing hydrogen in a hydrogen production plant HPP. The plant comprises a first electrolysis system ES1, comprising an active DC module Ma and at least one first-type electrolyzer E1, which is configured for producing a first hydrogen output HO1 by using a first power from the active DC module Ma, and a second electrolysis system ES2, comprising a passive DC module Mp and at least one second-type electrolyzer E2, which is configured for producing a second hydrogen output HO2 by using a second power from the passive DC module Mp. The method starts at a step 102. In a step 104, a selection is made if a ramp-up phase or a ramp-down phase shall be performed. In other cases, e.g. for a constant phase, no further actions may be taken.

The ramp-up phase starts at a step 106, where a first hydrogen output of the active DC module Ma is increased. A step 108 checks if the power output ramping-up of the of the active DC module Ma crosses (or just has crossed) a first predefined hydrogen output threshold HOₜₕᵣₑₛ₁. If yes, the second electrolysis system ES2 is switched on (step 110), and the first hydrogen output HO1 of the first electrolysis system ES1 is decreased to the first predefined hydrogen output threshold HOthres1 minus the second hydrogen output HO2 (step 112). In (optional) cases when a plurality of second electrolysis systems ES2 are in the hydrogen production plant, the ramping-up may be continued, i.e. this is checked in step 114, and is branched to step 106, again. Otherwise, the ramp-up phase ends at a step 116.

The ramp-down phase starts at a step 118, where a first power output of the first electrolysis system ES1 is decreased. A step 120 checks if the ramping-down continues (in step 118), or if it crosses (or just has crossed) a predefined second hydrogen threshold HOₜₕᵣₑₛ₂. If yes, the second electrolysis system ES2 is switched off (step 122), and the first hydrogen output HO1 of the first electrolysis system ES1 is increased to the second predefined hydrogen output threshold HOₜₕᵣₑₛ₂ plus the second hydrogen output HO2. In (optional) cases when a plurality of second electrolysis systems ES2 are in the hydrogen production plant, the ramping-down may be continued, i.e. this is checked in step 126, and is branched to step 106, again. Otherwise, the ramp-down phase ends at a step 128.

## Claims

1. A method for producing hydrogen in a hydrogen production plant (HPP), the plant comprising:
a first electrolysis system (ES1), comprising an active DC module (Ma) and at least one first-type electrolyzer (E1), which is configured for producing a first hydrogen output (HO1) by using a first power from the active DC module (Ma), and
a second electrolysis system (ES2), comprising a passive DC module (Mp) and at least one second-type electrolyzer (E2), which is configured for producing a second hydrogen output (HO2) by using a second power from the passive DC module (Mp),
wherein the method comprises the steps of:
in a ramp-up phase, increasing the first hydrogen output (HO1) of the first electrolysis system (ES1); and
when the first hydrogen output (HO1) of the first electrolysis system (ES1) crosses a first predefined hydrogen output threshold (HOₜₕᵣₑₛ₁),
switching on the second electrolysis system (ES2), and
decreasing the first hydrogen output (HO1) of the first electrolysis system (ES1) to the first predefined hydrogen output threshold (HOₜₕᵣₑₛ₁)
minus the second hydrogen output (HO2),
so that an overall hydrogen output (HOₜₒₜₐₗ) of the hydrogen production plant (HPP) is a sum of the first hydrogen output (HO1) and the second hydrogen output (HO2).

2. The method of claim 1, further comprising the steps of:
in a ramp-down phase, decreasing the first hydrogen output (HO1) of the first-type electrolyzer (E1); and
when the first hydrogen output (HO1) of the first electrolysis system (ES1) crosses a second predefined hydrogen output threshold (HOₜₕᵣₑₛ₂),
switching off the second electrolysis system (ES2), and
increasing the first hydrogen output (HO1) of the first electrolysis system (ES1) to the second predefined hydrogen output threshold (HOₜₕᵣₑₛ₂) plus the second hydrogen output (HO2).

3. The method of claim 1 or 2,
wherein the first predefined hydrogen output threshold (HOₜₕᵣₑₛ₁) is greater than or equal to the second hydrogen output (HO2),and/or
wherein the first predefined hydrogen output threshold (HOₜₕᵣₑₛ₁) minus the second electrolyzer output (HO2) is greater than or equal to the second predefined hydrogen output threshold (HOₜₕᵣₑₛ₂).

4. The method of any one of the preceding claims,
wherein the hydrogen production plant (HPP) comprises a plurality, N2, of second electrolysis systems (ES2),
so that the overall hydrogen output (HOₜₒₜₐₗ) of the hydrogen production plant (HPP) is a sum of the first hydrogen output (HO1) plus a sum of the N2 second maximum hydrogen outputs (HO2ₘₐₓ).

5. The method of any one of the preceding claims,
wherein the hydrogen production plant (HPP) comprises a plurality, N1, of first electrolysis systems (ES1).

6. The method of any one of the preceding claims,
wherein the first predefined hydrogen output threshold (HOₜₕᵣₑₛ₁) is higher, e.g. 10 % higher, 20 % higher, 30 % higher, 50 % higher, 70 % higher, 100 % higher, 150 % higher, 200 % higher, than the second hydrogen output (HO2), and/or
the second predefined hydrogen output threshold (HOₜₕᵣₑₛ₂) is higher than zero and/or lower than the second hydrogen output (HO2).

7. The method of any one of the preceding claims,
wherein the first-type electrolyzer (E1) is designed as a polymer electrolyte membrane, PEM, electrolysis system, and/or
wherein the second-type electrolyzer (E2) is designed as an alkaline water electrolysis system.

8. The method of any one of the preceding claims,
wherein the passive DC module (Mp) can be operated at zero power or at a maximum power (Ppₘₐₓ), and/or
wherein the passive DC module (Mp) can be operated at zero power, at the maximum power (Ppₘₐₓ), or at a low power (Pp_{low}), and/or
wherein the passive DC module (Mp) can be operated at three or more power levels, particularly by means of a tap changer,
wherein the second hydrogen output (HO2) can be produced by using the second power from the passive DC module (Mp) at any one of the above power levels except zero.

9. The method of any one of the preceding claims,
wherein the first hydrogen output (HO1) is a function of the first power from the active DC module (Ma), and of a temperature and/or a pressure of the at least one first-type electrolyzer (E1), and/or
wherein the second hydrogen output (HO2) is a function of the second power from the passive DC module (Mp), and of a temperature and/or a pressure of the at least one second-type electrolyzer (E2).

10. The method of any one of the preceding claims,
wherein the first hydrogen output (HO1) is a function of a degradation of the active DC module (Ma), and/or
wherein the second hydrogen output (HO2) is a function of a degradation of the passive DC module (Mp).

11. A hydrogen production plant (HPP), comprising:
a first electrolysis system (ES1), comprising an active DC module (Ma) and at least one first-type electrolyzer (E1), which is configured for producing a first hydrogen output (HO1) by using a first power from the active DC module (Ma),
a second electrolysis system (ES2), comprising a passive DC module (Mp) and at least one second-type electrolyzer (E2), which is configured for producing a second hydrogen output (HO2) by using a second power from the passive DC module (Mp), wherein a maximum of the second hydrogen output (HO2ₘₐₓ) is less than or equal to a maximum of the first hydrogen output (HO1ₘₐₓ), and
a control module, configured for controlling the passive DC module (Mp) and the active DC module (Ma) according to a method of any one of the preceding claims.

12. The hydrogen production plant (HPP) of claim 11,
wherein the controlling the passive DC module (Mp) and the active DC module (Ma) is dependent on an requested overall hydrogen output (HO_{total,req}) of the hydrogen production plant (HPP), and/or
the controlling the passive DC module (Mp) and the active DC module (Ma) is dependent on an available power from a power source, which delivers a sum of the first power for the active DC module (Ma) and the second power for the passive DC module (Mp).

13. The hydrogen production plant (HPP) of claim 11 or 12,
wherein the passive DC module (Mp) comprises uncontrolled rectifiers, and/or the active DC module (Ma) comprises controlled rectifiers.

14. A program element for executing the method of any one of claims 1 to 10, when running the program element on a control module of a hydrogen production plant (HPP) and/or on another processing unit.

15. A computer-readable storage medium where a computer program according to claim 14 is stored on.
